# FASCICULE DE BREVET EUROPEEN

(11) **EP 2 251 065 B1**
(45) Date de publication et mention de la délivrance du brevet: **04.07.2018**
(21) Numéro de dépôt: 10162576.2
(22) Date de dépôt: 11.05.2010
(51) Int. Cl.: F16K 15/03, F16K 15/14, A62C 35/02

(54) **Opercule sécable pour dispositif d'éjection d'un fluide**
Trennbares Verschlussorgan für Flüssigkeitsejektionsvorrichtung
Divisible lid for a fluid ejection device

(30) Priorité: 14.05.2009 FR 0953187
(43) Date de publication de la demande: 17.11.2010
(73) Titulaire: Airbus Opérations SAS, 31060 Toulouse (FR)
(72) Inventeur: Fabre, Christian, 31170, Tournefeuille (FR); Bignolais, Alain, 31490, Leguevin (FR)
(74) Mandataire: Gicquel, Olivier Yves Gérard

(56) Documents cités:
- WO-A-2006/061539
- US-A- 3 400 907
- US-A- 3 478 761
- US-A- 5 063 958

## Description

L'invention concerne la réalisation d'un dispositif d'éjection d'un fluide sous pression. Plus particulièrement l'invention concerne un tel dispositif destiné notamment à la lutte contre l'incendie.

Les dispositifs d'éjection d'un fluide sous pression tels que des extincteurs destinés à la lutte contre l'incendie se classent en deux catégories :
- Les dispositifs à pression permanente dans lesquels un gaz assure la pressurisation permanente d'un fluide au sein d'une bouteille unique lui servant de réservoir.
- Les dispositifs à pression non permanente dans lesquels le fluide contenu dans le réservoir n'est pressurisé qu'au moment de son éjection : cette pressurisation peut être obtenue en mettant le réservoir contenant le fluide en communication avec une source de gaz comprimé ou par des moyens mécaniques tel que le déplacement d'un piston, tendant à réduire le volume occupé par le fluide dans le réservoir.

Dans les deux cas, l'éjection du fluide implique de mettre en communication le fluide sous pression, contenu dans le réservoir, avec un circuit de distribution. Cette mise en communication peut être réalisée par l'interposition ente la sortie du réservoir et le circuit de distribution d'une vanne dont l'ouverture est pilotée par une commande extérieure. Cependant de tels dispositifs peuvent rester inactifs pendant des temps importants (plusieurs années) tout en étant soumis à des conditions environnementales sévères telles que l'humidité, le gel et de fortes amplitudes thermiques. Si bien que les systèmes à vanne, qui impliquent la présence de pièces mobiles et des contraintes d'étanchéité entre des pièces en mouvement relatif, ne présentent pas, en général, une fiabilité suffisante pour garantir le moment venu le fonctionnement du dispositif. Ils nécessitent donc une fréquence de contrôle élevée, particulièrement si le dispositif d'éjection du fluide est essentiel à un dispositif de sécurité tel qu'un système de lutte contre l'incendie. Ces contrôles fréquents ont une influence directe sur le coût de maintenance de tels dispositifs.

Afin de simplifier et de fiabiliser le dispositif, il est connu, par exemple du brevet EP1552859 ou de la demande de brevet US2005/150663 au nom de la demanderesse, d'utiliser un opercule sous la forme d'une membrane fermant le réservoir et l'isolant du circuit de distribution. Pour déclencher l'éjection du fluide la membrane est rompue pour un niveau de pression déterminé. Ce niveau de pression spécifique est atteint, dans le cas des dispositifs à pressurisation permanente, par l'activation d'un détonateur pyrotechnique judicieusement placé, de telle sorte que l'onde de choc résultant de son activation vienne déchirer ou rompre l'opercule. Dans le cas des dispositifs à pressurisation non permanente, l'opercule est avantageusement rompu lorsque la pression du fluide contenu dans le réservoir atteint un niveau adéquat pour son éjection, en fonction de l'application visée.

Dans les deux cas, il est nécessaire de collecter les débris de l'opercule après sa rupture afin d'éviter que ceux-ci ne viennent obstruer certains éléments sensibles du circuit de distribution, particulièrement lorsque le fluide éjecté est destiné à être pulvérisé et doit donc passer dans des buses à faible section de passage.

A cette fin il est connu d'installer une crépine juste en aval de l'orifice à la sortie du réservoir, crépine dont les mailles seront d'autant plus fines que les débris générés par la rupture de l'opercule seront petits. Une telle crépine constitue un obstacle perturbant l'écoulement du fluide et générant une perte de charge pénalisante pour l'efficacité du dispositif d'éjection du fluide.

Un autre opercule sécable est connu de US 3 478 761 A. Il existe donc un besoin pour un dispositif d'éjection d'un fluide de fiabilité et d'efficacité accrues, notamment au niveau du dispositif de mise en communication du réservoir avec le circuit de distribution.

Pour répondre à ce besoin, l'invention propose un opercule sécable selon la revendication 1. Les moyens formant pivot étant d'axe perpendiculaire au flux d'éjection, la partie rompue de l'opercule s'aligne naturellement avec le flux de sorte à minimiser les pertes de charge. Selon l'invention, l'axe de la liaison pivot est excentré par rapport à l'axe central de l'orifice d'éjection du fluide. Ainsi la partie rompue de l'opercule s'escamote de manière quasi complète et perturbe encore moins le flux de fluide éjecté. Selon l'invention, l'opercule comprend une zone affaiblie sur toute sa périphérie. Cette zone d'amorce de rupture va favoriser le découpage de l'opercule en un seul tronçon et éviter ainsi la formation de débris multiples plus difficiles à retenir.

Avantageusement, la liaison pivot peut être réalisée par la déformation d'une pièce de liaison. Ce mode de réalisation permet de limiter le nombre de pièces en mouvement. Dans ce cas, la liaison pivot peut être constituée par une zone non affaiblie de l'opercule et le pivotement se réaliser par la déformation en pliage de la membrane autour de cette zone non affaiblie.

Avantageusement l'orifice d'éjection du fluide du dispositif selon l'invention est de section sensiblement rectangulaire. Cette forme facilite le pivotement de la partie rompue de l'opercule se trouvant dans le flux et permet notamment d'utiliser comme moyen d'obturation un clinquant rigide dont une zone a été affaiblie. Un tel clinquant est apte à se rompre de manière quasi instantanée sous l'effet d'un seuil de pression, favorisant ainsi une éjection rapide du fluide, alors qu'une membrane plus souple est susceptible de se rompre de manière incomplète occasionnant ensuite des pertes de charges lors de l'éjection du fluide. Selon l'invention, la zone affaiblie, apte à favoriser la rupture de l'opercule, s'étend sur toute la périphérie de ce dernier. Cette configuration permet de favoriser la rupture en cisaillement pur de l'opercule sous l'effet du seuil de pression et par conséquent de favoriser l'escamotage de l'opercule après rupture ainsi que l'absence de débris.

Selon ce mode de réalisation il est préférable que l'axe de la liaison pivot soit lié à l'opercule et que celui-ci dispose en outre de la possibilité de se translater dans un plan sensiblement parallèle au flux d'éjection. Ainsi l'opercule est rompu par cisaillement dans un mouvement de translation, puis la partie rompue s'escamote par rotation autour de la liaison pivot. Avantageusement, les moyens de guidage en translation peuvent se prolonger dans une direction oblique par rapport au flux de sorte à escamoter la partie rompue de l'opercule contre l'une des parois de l'orifice d'éjection en minimisant ainsi les pertes de charge.

Selon un mode de réalisation particulier, la partie rompue de l'opercule se trouvant dans le flux déjection comprend un profil favorisant son escamotage en rotation et/ou en translation par effet hydrodynamique. On évite ainsi que cette partie d'opercule, une fois escamotée, ne puisse revenir en position sous l'effet de son propre poids ou ne se mette à battre dans le flux d'éjection du fluide.

Le dispositif selon l'invention, qui comporte peu de pièces en mouvement susceptible de se gripper, est particulièrement fiable et peut être avantageusement utilisé comme dispositif de sécurité dans un aéronef.

L'invention sera maintenant plus précisément décrite dans le cadre de modes de réalisation préférés, qui n'en sont nullement limitatifs, représentés sur les figures 1 à 10 dans lesquelles :
- la figure 1 représente une vue en coupe du dispositif d'éjection d'un fluide
- la figure 2 représente selon la même coupe, une vue de détail au niveau de l'orifice d'éjection au cours des différentes phases de rupture de l'opercule et d'éjection du fluide selon un premier mode de réalisation. Figure 2A avant déclenchement de l'éjection du fluide, figure 2B dans l'instant immédiatement suivant son déclenchement et figure 2C pendant l'éjection du fluide.
- La figure 3 représente en vue de face et en coupe une réalisation de l'opercule utilisant une constitution dudit opercule en matériau composite
- la figure 4 illustre en vue de face et en coupe différentes variantes (figures 4A à 4C) de réalisation d'un opercule où l'axe de la liaison pivot est réalisé par la structure de la membrane constituant l'opercule.
- La figure 5 montre le comportement de l'opercule avant déclenchement de l'éjection (figure 5A) et pendant l'éjection du fluide (figure 5B)
- La figure 6 illustre en perspective et en éclaté l'assemblage d'un opercule selon un mode de réalisation
- La figure 7 montre le comportement de l'opercule selon ce mode de réalisation au cours des différentes phases d'éjection du fluide selon ce mode de réalisation
- La figure 8 représente en position escamotée de la partie rompue l'opercule, en coupe et en perspective selon un mode de réalisation particulier des rainures de guidage de l'axe
- La figure 9 présente un mode de réalisation particulier du profil de la partie rompue de l'opercule se trouvant dans le flux favorisant l'escamotage de la partie rompue
- La figure 10 représente en coupe et en perspective une réalisation pour lequel la liaison pivot est réalisée par un lien déformable, en position fermée (10A) et en position ouverte (10B) de l'opercule.

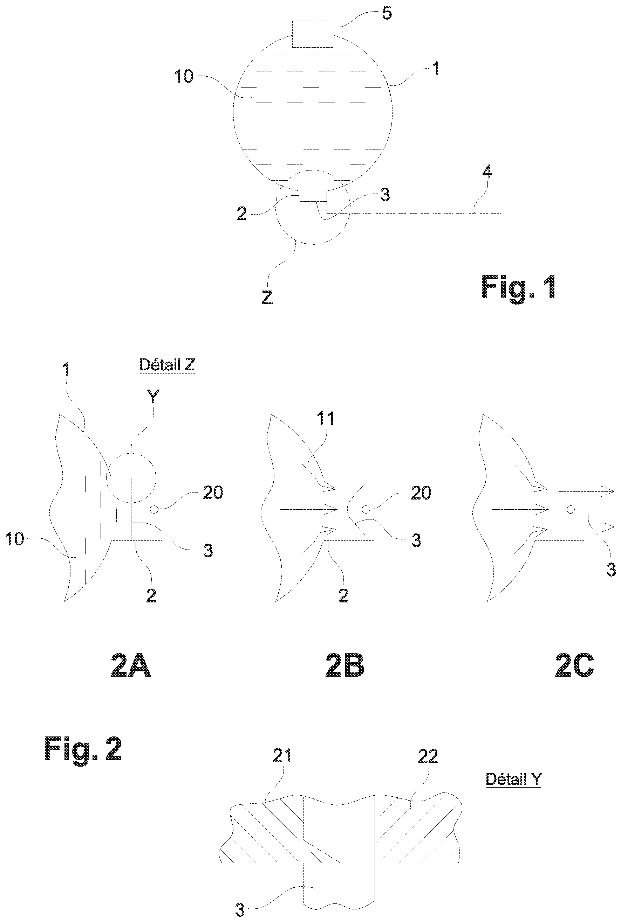

Figure 1, un dispositif pour l'éjection d'un fluide comprend :
- Un réservoir (1),
- lequel réservoir est au moins partiellement rempli d'un fluide (10).
- Un orifice d'éjection (2),
- relié à un circuit de distribution (4),
- des moyens (5) pour générer une pression dans le réservoir,
- et un opercule (3) pour isoler le contenu du réservoir du circuit de distribution

L'homme du métier connaît différents modes de réalisation de ces dispositifs d'éjection d'un fluide. Ceux-ci sont décrits notamment dans les demandes de brevets FR2922972 et WO2006061539 au nom de la demanderesse. Le fluide (10) peut être stocké dans le réservoir sous une pression permanente et dans ce cas les moyens de pressurisation du réservoir seront absents ou seront simplement destinés à générer une onde de choc apte à rompre l'opercule (3). Le réservoir peut n'être que partiellement rempli par le fluide à éjecter, définissant ainsi deux chambres, lesquelles peuvent être séparées par un élément de séparation tel qu'une membrane. Le réservoir peut être de toute forme adaptée à l'utilisation visée. Il peut notamment être de forme cylindrique et comporter deux chambres dont une contenant le fluide, séparées par un piston. La nature du fluide peut être diverse, il peut notamment s'agir d'un fluide apte à lutter contre l'incendie, tel qu'un fluorocétone comme le Novec 1230® commercialisé par la société 3M. Il peut aussi s'agir d'une huile hydraulique.

Figure 2A en service et hors fonctionnement, l'opercule (3) isole l'intérieur du réservoir du circuit de distribution. Il se présente avantageusement sous la forme d'une membrane, de section équivalente à la section intérieure de l'orifice d'éjection, de sorte à obturer le passage, laquelle membrane est liée en sa périphérie audit orifice d'éjection (2). Avantageusement, un axe (20), perpendiculaire au flux d'éjection est placé en aval de ladite membrane (3). Afin de déclencher l'éjection du fluide, la pression est augmentée à l'intérieur du réservoir par un moyen approprié, par exemple par un générateur de gaz pyrotechnique. La membrane (3) est sécable, c'est à dire que lorsque la pression atteint un seuil défini, figure 2B, la périphérie de la membrane se rompt, libérant ainsi le passage et autorisant l'éjection du fluide dans le circuit de distribution. Une fois rompue, la membrane, déformée et emportée par le flux de fluide, vient s'enrouler autour de l'axe (20) figure 2C, qui joue alors le rôle de pivot et permet à ladite membrane (3), pliée autour de cet axe, de s'aligner avec le flux d'éjection (11) selon une orientation limitant les pertes de charges. Cette réalisation est très simple mais nécessite des essais pour sa mise au point. Il faut en effet assurer que la rupture ait bien lieu en périphérie et non au centre de la membrane. Ceci peut être obtenu, par exemple, en serrant la périphérie de la membrane entre deux pièces (21, 22) dont l'une (21) présente une face de contact apte à introduire une amorce de rupture (détail Y de la figure 2) en périphérie de la membrane faisant office d'opercule. Alternativement il est possible lors du montage de marquer la périphérie de l'opercule d'une rayure avec un outil tel qu'une pointe à tracer.

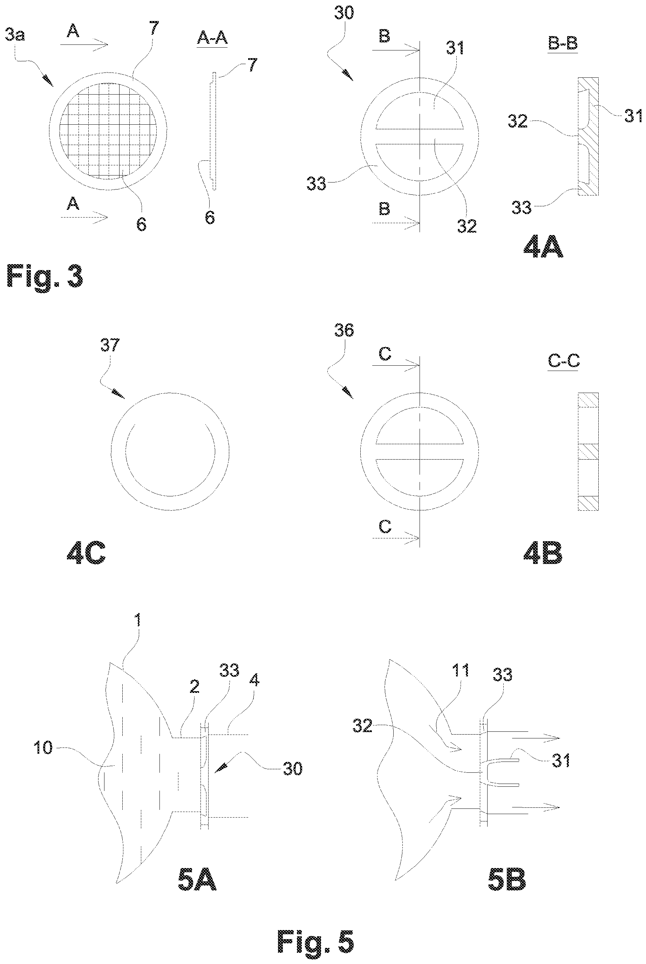

Il faut également que l'axe (20) soit placé à une distance suffisante de la membrane, qui, vu depuis le réservoir se déforme de manière concave sous l'effet de la pression alors qu'elle n'est pas encore rompue, puis de manière convexe sous l'effet du flux, ce qui permet sa capture par l'axe (20). La distance doit donc être suffisante pour permettre l'inversion de courbure de la partie rompue de l'opercule, mais ceci sans que cette partie n'ait le temps de prendre suffisamment de vitesse dans le flux. Le diamètre de l'axe (20) doit également être suffisant pour que la partie rompue de l'opercule soit effectivement arrêtée par l'axe sans qu'elle ne puisse l'éviter par un simple basculement, mais rester suffisamment faible pour ne pas perturber de manière trop importante l'écoulement. Ce mode de réalisation est plus facilement mis au point en utilisant un opercule (3a) constitué d'un matériau composite à renfort fibreux, figure 3. Selon ce mode de réalisation, l'opercule (3a) comprend deux zones :
- une zone centrale (6) renforcée par des filaments ou un tissu de verre, d'acier, de polyamide ou de toute autre fibre dans une matrice en élastomère
- une zone périphérique (7) également constituée d'un élastomère mais sans renfort

La zone périphérique (7) n'étant pas renforcée, celle-ci cède préférentiellement lorsque la pression appliquée à la membrane (3) atteint un seuil critique. La présence du tissu dans la zone centrale (6) empêche que celle-ci ne se fragmente en débris tout en lui conférant suffisamment de souplesse pour inverser sa courbure sur une courte distance et venir s'enrouler sur l'axe (20).

Il est toutefois plus avantageux, en termes de mise au point et de fiabilité de fonctionnement, d'intégrer la liaison pivot à la structure même de l'opercule.

Selon cette réalisation, figure 4A, l'opercule (30) comprend une zone périphérique d'épaisseur plus importante (33) ainsi qu'une zone centrale renforcée (32). Une partie d'épaisseur plus faible (31) s'étend entre ces deux zones renforcées.

Avantageusement la liaison entre la zone renforcée périphérique (33) et la partie d'épaisseur réduite (31) présente un profil apte à favoriser les amorces de rupture sur la périphérie, alors que la liaison entre la zone centrale renforcée (32) et la partie d'épaisseur réduite (31) présente au contraire un profil limitant les concentrations de contrainte. La liaison de la partie centrale (31) de l'opercule avec sa zone périphérique (33) constitue par conséquent une zone affaiblie apte à favoriser et amorcer la rupture de l'opercule.

Figure 5A, l'opercule (30) est monté entre l'orifice d'éjection (2) et l'extrémité du circuit de distribution par pincement de sa zone périphérique renforcée (33) entre deux flasques. Les extrémités périphériques de la partie centrale renforcée (32) sont également serrées entre ces deux flasques. Lors du déclenchement de l'éjection du fluide, lorsque le seuil de pression est atteint, la partie amincie (31) se désolidarise par rupture de la zone périphérique (33), mais pas de la partie renforcée centrale (32), pour laquelle la transition de section est plus évolutive. Figure 5B, sous l'effet du flux d'éjection, les parties amincies (31) plient le long de leur liaison avec la partie centrale renforcée et s'orientent de manière sensiblement parallèle au flux.

Ce mode de réalisation est plus fiable mais la fabrication des opercules (30) est plus complexe à réaliser de manière économique pour des petites séries. Alternativement, figure 4B, un résultat similaire peut être obtenu en utilisant un opercule composite. Dans ce cas, on découpe à l'emporte-pièce dans un clinquant métallique une pièce (36) correspondant au contour de la partie périphérique (33) et de la zone centrale renforcée (32). On vient ensuite rapporter sur cette pièce (36), par exemple par collage, un opercule composite (3a) dont la structure, partiellement renforcée par des fibres, est équivalente à celle de la variante correspondante du premier mode de réalisation. Lorsque la pression atteint un seuil critique la partie composite centrale (6) cède en périphérie mais reste maintenue par le clinquant (36) en zone centrale, clinquant qui est dans ce cas dimensionné pour ne pas céder sous l'effet de la pression.

Selon ce mode de réalisation de l'opercule (30), il est également possible d'utiliser un clinquant de renfort (37) dont la forme permet de réaliser la liaison pivot de manière excentrée. Dans ces conditions, la partie rompue de la membrane est suffisamment souple pour s'escamoter en se plaquant contre la paroi d'entrée du circuit de distribution, minimisant ainsi les pertes de charge.

Ce mode de réalisation est encore plus fiable que le premier, néanmoins le mode de rupture périphérique est tel que dans certaines circonstances, ladite rupture périphérique n'est pas complète et une partie de l'opercule, encore maintenue sur une longueur limitée de sa périphérie peut provoquer une perte de charge dans l'écoulement du fluide.

En effet, l'opercule étant souple, avant rupture, il se déforme comme une membrane sous l'effet de la pression, prenant une forme concave vu depuis le réservoir. La rupture s'initie en traction sur un point de la périphérie, puis se propage par déchirure selon un mode d'ouverture en torsion entre les bords de ladite déchirure. Il arrive, que l'effort appliqué par le flux d'éjection du fluide, entraîne un pliage de la partie de l'opercule désolidarisée de son attache périphérique au lieu de propager la déchirure de celui-ci tout le long du périmètre. Pour éviter ce type de comportement il est préférable de rompre complètement l'opercule sans propagation de déchirure, selon un mode de rupture en cisaillement pur.

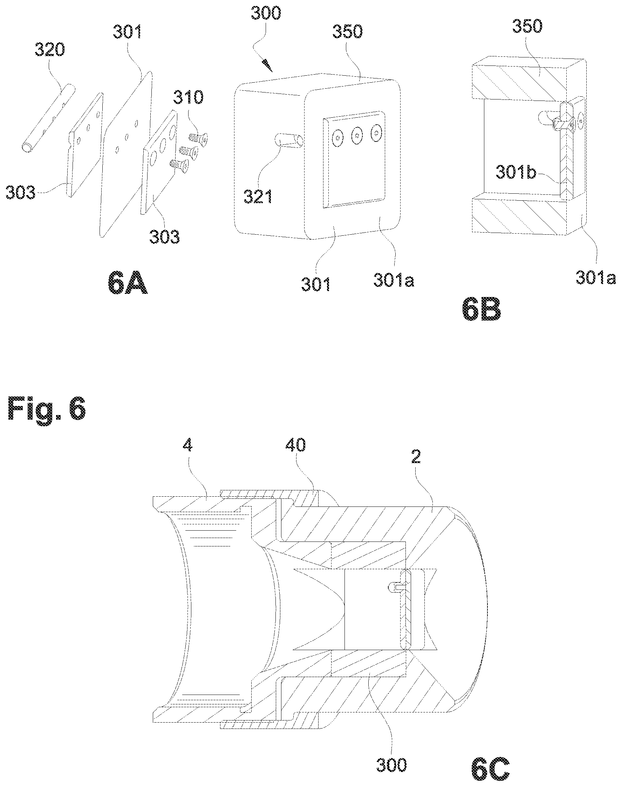

Selon un mode de réalisation, figure 6, l'opercule (300) est constitué d'un assemblage d'éléments comprenant :
- une feuille de clinquant (301), de préférence métallique et de section suffisante pour couvrir la totalité de l'orifice du réservoir,
- laquelle feuille est enserrée, dans sa partie centrale (301b), entre deux flasques (303) par l'intermédiaire de vis (310) traversant les deux flasques et ladite feuille,
- lesdites vis (310) venant se visser transversalement dans un axe (320) de longueur supérieure à la larguer des flasques, qui est ainsi rendu solidaire des flasques et de la feuille de clinquant.

L'ensemble comprenant les flasques (303), l'axe (320) et le clinquant (301) ainsi assemblés, est monté dans une noix (350) comprenant un alésage dont la section est de forme adaptée à entourer les flasques (303) avec un léger jeu périphérique. La noix (350) comprend deux rainures (321) aptes à recevoir les deux extrémités de l'axe (320). A cette fin la noix peut être réalisée en deux parties, ou alternativement, l'axe (320) peut être initialement glissé à travers les deux rainures (321) de la noix (350), les flasques (303) et le clinquant (301) étant alors assemblés sur celui-ci par l'intermédiaire de vis (310). L'homme du métier adaptera facilement toute autre méthode d'assemblage. Figure 6C, l'ensemble ainsi assemblé est pris en pincement entre l'orifice (2) du réservoir et l'extrémité du circuit de distribution (4), connectés entre eux par un raccord union (40). Avantageusement, selon ce mode de réalisation, les flaques (303) assurent une protection du clinquant (301) contre d'éventuels petits chocs susceptibles de survenir lors de l'installation du dispositif d'éjection du fluide sur le réseau de distribution. La partie centrale (301b) du clinquant est renforcée par les flasques (303) alors que la partie externe du clinquant (301a) est enserrée entre la noix (350) et l'extrémité d'entrée du circuit de distribution (4). La zone périphérique du clinquant comprise entre les flasques et la partie externe (301a) encastrée constitue par conséquent une zone affaiblie apte à amorcer la rupture du clinquant.

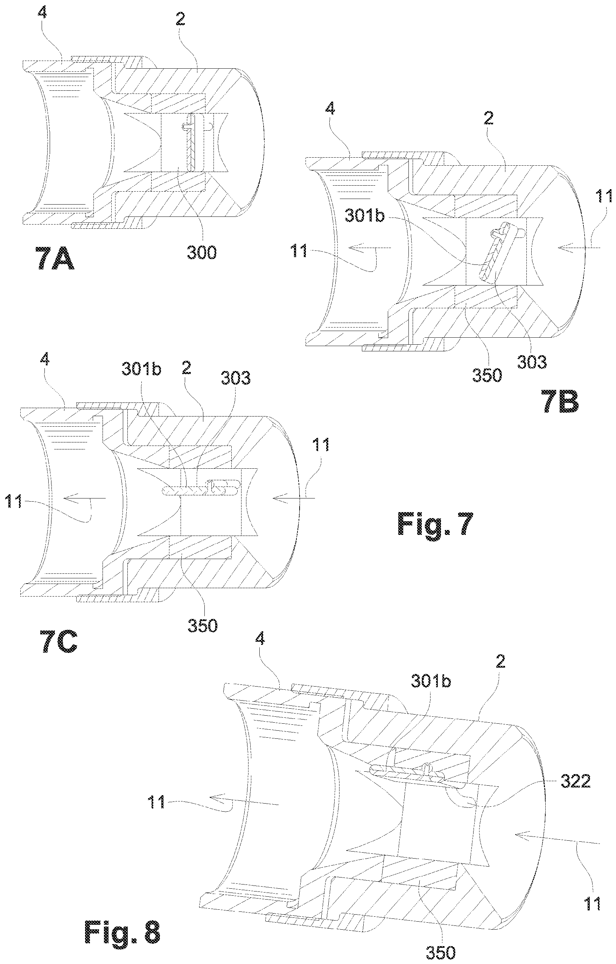

Figure 7A, lorsque la pression dans le réservoir (1) atteint un seuil défini, le pourtour du clinquant (301) qui se trouve enserré entre la noix et l'extrémité de l'orifice (2) se rompt en cisaillement pur, la partie de clinquant (301b) enserrée entre les flasques (303) se déplaçant en translation guidée par l'axe dans les rainures oblongues (321). La partie enserrée dans les flasques est alors libre en rotation, figure 7B, et le flux de fluide (11) tend à l'escamoter par pivotement autour de l'axe (320). Pour un escamotage plus efficace, il est préférable que l'axe du pivot soit excentré, de sorte que la partie rompue vienne sensiblement se plaquer sur les parois du conduit. Cependant, la rigidité des flasques (303) ne leur permet pas de s'adapter aux variations de largeur de l'alésage lors d'une telle rotation excentrée, de sorte que dans ce mode de réalisation, la section de l'opercule est avantageusement rectangulaire et de préférence carrée.

Figure 7C, rapidement, la partie rompue de l'opercule s'escamote sous l'effet du flux de fluide. Figure 8, pour favoriser cet escamotage, les rainures oblongues (322) peuvent, selon un mode de réalisation particulier, comprendre une portion inclinée de sorte à rapprocher la partie rompue de l'opercule des parois du conduit une fois que celle-ci s'est orientée parallèlement au flux.

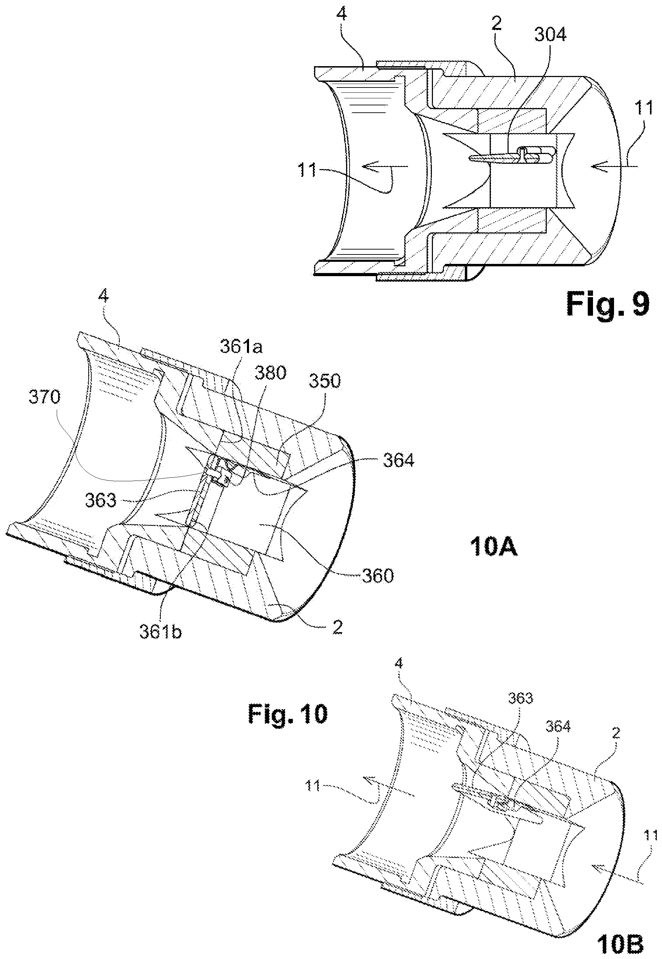

Figure 9, pour maintenir la partie rompue de l'opercule dans sa position escamotée, celle-ci peut présenter un profil particulier (304) lui procurant une portance hydrodynamique lorsqu'elle est placée dans le flux. Ce profil est obtenu par l'utilisation de flasques (304) adaptés.

Figure 10, selon une réalisation l'opercule (360) est constitué d'un assemblage d'éléments comprenant :
- une feuille de clinquant (361), de préférence métallique et de section suffisante pour couvrir la totalité de l'orifice du réservoir,
- laquelle feuille est enserrée, dans sa partie centrale, entre deux flasques (363) par l'intermédiaire de vis (370) traversant les deux flasques et ladite feuille,
- lesdites vis (370) venant se visser transversalement dans un élément d'extrémité (380) d'un lien déformable (364) lui-même lié à une noix (350)

L'ensemble ainsi assemblé est maintenu entre l'orifice du réservoir et le circuit de distribution comme selon le troisième mode de réalisation. La partie centrale (361b) du clinquant est renforcée par les flasques (363) alors que la partie externe du clinquant (361a) est enserrée entre la noix (350) et l'extrémité d'entrée du circuit de distribution (4). La zone périphérique du clinquant (361) comprise entre les flasques et la partie externe (361a) encastrée constitue par conséquent une zone affaiblie apte à amorcer la rupture du clinquant (361).

Figure 10A, le lien déformable (364) est avantageusement préformé de manière à favoriser le déplacement de l'ensemble clinquant et flasques (361b, 363) selon deux modes séquentiels.

La présence des flasques rigides (363) et s'étendant sur la surface d'ouverture de la noix (350), outre le fait de protéger le clinquant (361) comme selon le troisième mode de réalisation, permet d'assurer la rupture de celui-ci en cisaillement pur. Ainsi, lorsque la pression dans le réservoir atteint une valeur critique, l'opercule se rompt en cisaillement pur. Ce mode de déformation est favorisé par le préformage du lien (364) qui, selon un premier mode de déformation, favorise un déplacement parallèlement au flux (11) lors de son dépliage, la partie rompue de l'opercule étant par ailleurs guidée en périphérie par la section d'ouverture de la noix.

Figure 10B, lorsque le lien (364) est déplié, la partie rompue de l'opercule entre dans une zone de section d'ouverture plus importante, à l'entrée du circuit de distribution (4). La partie rompue n'est alors plus guidée en translation et peut s'escamoter, par flexion de l'extrémité du lien (364), sous l'effet du flux (11). L'homme du métier comprendra que selon ce mode de réalisation, la section d'ouverture de la noix n'est pas nécessairement rectangulaire, l'escamotage de la partie rompue de l'opercule se produisant à l'extérieur de celle-ci en aval dans le sens de l'écoulement.

La description ci-avant illustre clairement que par ses différentes caractéristiques et leurs avantages, la présente invention atteint les objectifs qu'elle s'était fixés. En particulier, d'améliorer la fiabilité de la mise en communication du dispositif d'éjection d'un fluide avec le circuit de distribution en limitant les pièces mobiles, tout en évitant la formation de débris, et sans créer de pertes de charges excessives. Le dispositif d'éjection d'un fluide selon l'invention est adapté à tout type de fluide, que celui-ci se trouve sous forme gazeuse, liquide ou diphasique sous la forme d'un aérosol, d'une suspension ou d'une émulsion. Il est toutefois plus particulièrement avantageux lorsque le fluide éjecté est de forte densité ou de viscosité importante et qu'il est éjecté à fort débit. Dans ce cas en effet, les pertes de charges liées à la présence d'obstacles dans l'écoulement sont particulièrement importantes.

## Revendications

1. Opercule (300) sécable obturant l'orifice du conduit de passage d'un fluide comprenant :
- une zone (7, 31) affaiblie sur toute sa périphérie apte à se rompre pour une pression définie dudit fluide
- un axe (320) solidaire dudit opercule (300) sensiblement perpendiculaire au flux de fluide traversant l'orifice et formant liaison pivot avec le conduit de passage du fluide
**caractérisé en ce que** l'opercule sécable comprend des moyens de guidage en translation dudit axe 320) parallèlement au flux de fluide traversant l'orifice et que ledit axe (320) est excentré par rapport à un axe central de l'orifice d'éjection du fluide et placé en aval de l'opercule (300) selon un sens d'écoulement du fluide.

2. Opercule (300) selon la revendication 1 **caractérisé en ce qu'**il comprend des moyens de guidage de l'axe dans un plan oblique par rapport au flux du fluide

3. Opercule (300) selon les revendications 1 ou 2 caractérisé ce que la partie rompue de l'opercule se trouvant dans le flux d'éjection comprend un profil apte à favoriser son escamotage par effet hydrodynamique

4. Dispositif d'éjection d'un fluide **caractérisé en ce qu'**il comprend un opercule (300) selon l'une quelconque des revendications précédentes

5. Aéronef **caractérisé en ce qu'**il comprend un dispositif d'éjection d'un fluide selon la revendication 4.

## Patentansprüche

1. Abtrennbarer Schutzdeckel (300), der die Öffnung des Durchgangskanals eines Fluids verschließt, der enthält:
- eine geschwächte Zone (7, 31) über seinen ganzen Umfang, die bei einem definierten Druck des Fluids brechen kann,
- eine fest mit dem Schutzdeckel (300) verbundene Achse (320) im Wesentlichen lotrecht zum Strom des die Öffnung durchquerenden Fluids und die eine Drehzapfenverbindung mit dem Durchgangskanal des Fluids bildet,
**dadurch gekennzeichnet, dass** der abtrennbare Schutzdeckel Führungseinrichtungen der Achse (320) in Translationsrichtung parallel zum die Öffnung durchquerenden Fluidstrom enthält,
und dass die Achse (320) bezüglich einer Mittelachse der Ausstoßöffnung des Fluids außermittig und gemäß einer Fließrichtung des Fluids stromabwärts hinter dem Schutzdeckel (300) angeordnet ist.

2. Schutzdeckel (300) nach Anspruch 1, **dadurch gekennzeichnet, dass** er Führungseinrichtungen der Achse in einer bezüglich des Stroms des Fluids schrägen Ebene enthält.

3. Schutzdeckel (300) nach den Ansprüchen 1 oder 2, **dadurch gekennzeichnet, dass** der gebrochene Teil des Schutzdeckels, der sich im Ausstoßstrom befindet, ein Profil enthält, das sein Verschwinden durch hydrodynamische Wirkung begünstigt.

4. Ausstoßvorrichtung eines Fluids, **dadurch gekennzeichnet, dass** sie einen Schutzdeckel (300) nach einem der vorhergehenden Ansprüche enthält.

5. Luftfahrzeug, **dadurch gekennzeichnet, dass** es eine Ausstoßvorrichtung eines Fluids nach Anspruch 4 enthält.

## Claims

1. Divisible seal (300) sealing the orifice of the duct through which a fluid passes, comprising:
- a zone (7, 31) weakened around its entire periphery and able to rupture for a defined pressure of the said fluid,
- a rod (320) secured to the said seal (300) substantially at right angles to the flow of fluid passing through the orifice and forming a pivot connection with the fluid passage duct,
**characterized in that** the divisible seal comprises means of guiding the translational movement of the said rod (320) parallel to the flow of fluid passing through the orifice,
and **in that** the said rod (320) is off-centred with respect to a central axis of the fluid ejection orifice and positioned downstream of the seal (300) in a direction of flow of the fluid.

2. Seal (300) according to Claim 1, **characterized in that** it comprises means for guiding the rod in a plane that is oblique with respect to the flow of fluid.

3. Seal (300) according to Claims 1 or 2, **characterized in that** the divided part of the seal that lies in the ejection flow has a profile capable of encouraging it to retract through a hydrodynamic effect.

4. Device for ejecting 2 fluid, **characterized in that** it comprises a seal (300) according to any one of the preceding claims.

5. Aircraft **characterized in that** it comprises a fluid ejection device according to Claim 4.
